# FASCICULE DE BREVET EUROPEEN

(11) **EP 0 738 219 B1**
(45) Date de publication et mention de la délivrance du brevet: **04.06.1997**
(21) Numéro de dépôt: 95902179.1
(22) Date de dépôt: 29.11.1994
(51) Int. Cl.: B60T 13/57

(54) **SERVOMOTEUR PNEUMATIQUE D'ASSISTANCE AU FREINAGE, A FONCTIONNEMENT SILENCIEUX**
GERÄUSCHARMER UNTERDRUCKBREMSKRAFTVERSTÄRKER
SILENT PNEUMATIC BRAKE SERVO

(30) Priorité: 07.01.1994 FR 9400124
(43) Date de publication de la demande: 23.10.1996
(73) Titulaire: Bosch Systemes de Freinage, 93700 Drancy (FR)
(72) Inventeur: VERBO, Ulysse, F-93600 Aulnay-sous-Bois (FR); MONTEILLET, Jean-Claude, F-93700 Drancy (FR)
(74) Mandataire: Bentz, Jean-Paul
(86) Numéro de dépôt international: FR9401382
(87) Numéro de publication internationale: WO9518733

(56) Documents cités:
- EP-A- 0 573 234
- DE-A- 3 413 739
- DE-A- 3 812 452
- GB-A- 2 216 970

## Description

La présente invention concerne les servomoteurs pneumatiques, du type de ceux qui sont utilisés pour fournir une assistance au freinage des véhicules automobiles.

De tels servomoteurs comportent de façon classique une enveloppe possédant un axe de symétrie, séparée de façon étanche par une structure de paroi mobile en une chambre avant reliée en permanence à une source de dépression, et une chambre arrière reliée sélectivement à la chambre avant ou à l'atmosphère extérieure par une valve à trois voies actionnée par un plongeur coulissant dans un alésage de la paroi mobile et solidaire d'une tige de commande axiale soumise à l'action d'un ressort de rappel disposé dans un espace annulaire entre la tige de commande et une partie tubulaire arrière de la structure de paroi mobile faisant saillie à l'extérieur de l'enveloppe, la valve à trois voies étant disposée dans cette partie tubulaire arrière et comportant un élément de clapet coopérant par une première surface annulaire avec un premier siège de clapet formé sur le plongeur et par une seconde surface annulaire avec un second siège de clapet formé sur la paroi mobile.

Le document DE-A-3 812 452 divulgue un servomoteur de ce type, dans lequel les première et seconde surfaces annulaires sont dans des plans transversaux différents.

Ces servomoteurs sont habituellement disposés dans le compartiment moteur du véhicule, sur le tablier de celui-ci, de sorte que la tige de commande du servomoteur fasse saillie dans l'habitacle pour pouvoir être actionnée par le conducteur. Il s'ensuit que la partie centrale arrière de la paroi mobile, comportant la valve à trois voies, fait également saillie à l'intérieur de l'habitacle.

Il en résulte que, lorsque le conducteur actionne la pédale de frein reliée à la tige de commande du servomoteur, ce dernier aspire de l'air à la pression atmosphérique dans l'habitacle du véhicule. L'air mis en mouvement par le fonctionnement du servomoteur génère alors des bruits qui sont intégralement transmis dans l'habitacle du véhicule.

On a tenté d'apporter diverses solutions à ce problème. Par exemple, le document FR-A-2 551 009 prévoit des moyens de guidage de l'air aux alentours immédiats de la valve à trois voies, en amont et en aval de celle-ci.

Le document FR-A-2 516 880 prévoit un dispositif de silencieux en mousse réticulée, disposé à l'intérieur de la partie centrale arrière de la structure de paroi mobile, ce dispositif comportant une surface externe s'appliquant contre la surface interne de cette partie centrale arrière, et dont l'intérieur est formé avec des ouvertures de passage ininterrompu, orientées suivant la direction de la tige de commande, pour procurer un passage d'écoulement de l'air au travers du dispositif.

Le document DE-A-3 924 672 prévoit quant à lui un servomoteur dont la prise d'air à la pression atmosphérique est située dans le compartiment moteur du véhicule.

Toutefois, ces solutions antérieures présentent encore des dispositifs imparfaits, ou économiquement inapplicables car trop complexes. De plus, dans le but de réduire le bruit de fonctionnement, ces systèmes introduisent sur le parcours de l'air des obstacles à son mouvement qui augmentent le temps de réponse du servomoteur au début de sa phase d'actionnement.

D'autre part, les études menées par le demandeur ont montré que le bruit généré par le fonctionnement d'un servomoteur a comme source principale la valve à trois voies elle-même, qui impose à l'air en mouvement un parcours anguleux, générant des bruits de sifflement pouvant devenir gênants.

La présente invention a donc pour but de proposer un servomoteur dont le fonctionnement soit silencieux, en mettant en oeuvre des moyens simples, fiables et peu onéreux, et qui ne dégradent pas le temps de réponse du servomoteur.

Dans ce but, l'invention propose un servomoteur du type rappelé plus haut, dans lequel les première et seconde surfaces annulaires sont raccordées par une surface de forme générale tronconique de guidage de l'air en mouvement en aval du premier siège de clapet lorsqu'il est éloigné de la première surface annulaire.

D'autres buts, caractéristiques et avantages de la présente invention ressortiront plus clairement de la description qui suit d'un exemple de réalisation donné à titre illustratif, en référence aux dessins annexés sur lesquels:
- La Figure 1 est une vue de côté, en coupe longitudinale, représentant la partie centrale arrière d'un servomoteur pneumatique d'assistance au freinage réalisé conformément à la présente invention,
- la Figure 2 est une vue semblable à celle de la Figure 1, d'une variante de réalisation, et
- la Figure 3 est une vue à plus grande échelle de la valve à trois voies équipant le servomoteur de l'invention.

Les Figures représentent la partie centrale arrière d'un servomoteur pneumatique d'assistance au freinage prévu pour être placé de façon habituelle entre la pédale de frein d'un véhicule et le maître-cylindre commandant le circuit de freinage hydraulique de ce véhicule. Par convention, on appelle "avant" du servomoteur la partie de ce dernier tournée vers le maître-cylindre et "arrière" du servomoteur la partie tournée vers la pédale de frein. Sur les Figures, l'avant est ainsi à gauche et l'arrière à droite.

Le servomoteur représenté comprend un enveloppe extérieure 10 en forme de coquille, présentant une symétrie de révolution autour d'un axe X-X'. Seule la partie centrale arrière de cette enveloppe 10 est représentée sur les Figures.

Une structure de paroi mobile 12 délimite à l'intérieur de l'enveloppe 10 une chambre avant 14 et une chambre arrière 16. La paroi mobile 12 est associée à une membrane déroulante souple en élastomère dont le bord périphérique intérieur est reçu de façon étanche grâce à un bourrelet 18 dans un piston creux d'assistance 20 disposé selon l'axe X-X' du servomoteur, et dont le bord périphérique extérieur (non représenté) est fixé de façon étanche sur l'enveloppe extérieure 10.

Le piston creux 20 se prolonge vers l'arrière sous la forme d'une partie tubulaire 22 qui traverse de façon étanche la paroi arrière de l'enveloppe 10. Un ressort de compression 24 interposé entre le piston 20 et la paroi avant (non représentée) de l'enveloppe 10 maintient normalement le piston 20 dans la position arrière de repos illustrée sur les Figures, dans laquelle la chambre arrière 16 présente son volume minimal et la chambre avant 14 son volume maximal.

Dans la partie centrale de la paroi mobile située en avant de la partie tubulaire arrière 22, le piston 20 présente un alésage 26 dans lequel est reçu en coulissement un plongeur 28 présentant également une symétrie de révolution autour de l'axe X-X'. L'extrémité avant d'une tige de commande 30 du servomoteur, disposée également selon l'axe X-X', est montée rotulante dans un alésage borgne du plongeur 28.

L'extrémité arrière (non représentée) de la tige de commande 30, qui fait saillie à l'extérieur de la partie tubulaire 22, est commandée directement par la pédale de frein du véhicule (non représentée).

L'espace annulaire 32 autour de la tige de commande 30 peut communiquer avec la chambre arrière 16 au travers d'un passage radial 34 formé dans la partie centrale du piston 20, lorsque des moyens d'assistance commandés par le plongeur 28 sont actionnés.

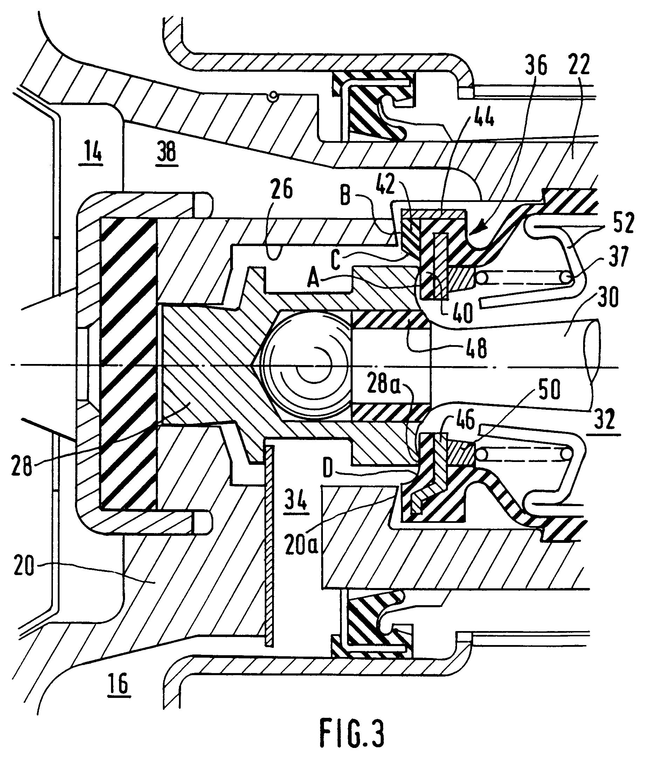

De façon classique, et comme on le voit mieux sur la Figure 3, ces moyens d'assistance comprennent une valve à trois voies comportant un clapet annulaire 36 et deux sièges de clapet annulaires 20a et 28a formés respectivement à l'arrière de la partie centrale du piston 20 et à l'arrière du plongeur 28, un ressort de clapet 37 sollicitant le clapet 36 en direction des sièges 20a et 28a.

Lorsque la tige de commande 30 est en position arrière de repos, la valve à trois voies établit normalement une communication entre les deux chambres 14 et 16 du servomoteur par l'intermédiaire du passage radial 34 et d'un passage sensiblement axial 38 formé dans la partie centrale du piston 20, le siège de clapet 20a étant légèrement écarté du clapet annulaire 36.

Lorsque le conducteur du véhicule actionne la pédale de frein, il en résulte un mouvement vers l'avant de la tige de commande 30, du plongeur 28 et du clapet 36 qui, dans un premier temps, isole l'une de l'autre les chambres 14 et 16 en fermant le passage de valve 20a-36, puis, dans un deuxième temps, ouvre le passage de valve 28a-36 et permet la communication entre la chambre arrière 16 et l'espace annulaire 32.

Dans une conception classique de valve à trois voies, telle qu'illustrée par le document DE-A-3 924 672 précité, l'espace annulaire 32 communique avec l'atmosphère extérieure de façon axiale, c'est à dire autour de la tige de commande 30. L'air est ainsi aspiré dans la chambre arrière 16 par le passage de valve 28a-36 entre le clapet 36 et le siège de clapet 28a formé sur le plongeur 28.

Dans une telle conception, l'interstice constitué par le passage de valve 28a-36 constitue une source de bruits. Classiquement, un filtre est disposé entre la tige de commande et l'extrémité arrière de la partie tubulaire 22, pour remplir à la fois les fonctions de filtre à air et d'atténuateur de bruits. Dans cette dernière fonction, le filtre offre une résistance importante au passage de l'air, et donc une entrave au fonctionnement du servomoteur, qui dégrade le temps de réponse de ce dernier.

La présente invention a précisément pour but de réduire le bruit engendré par la valve à trois voies, en prévoyant au moins une surface de guidage pour l'air en mouvement. Comme on le voit mieux sur la Figure 3, les surfaces annulaires du clapet 36 qui coopèrent avec les sièges de clapet 20a et 28a sont décalées, et sont raccordées par une surface approximativement tronconique.

De façon plus précise, la surface du clapet tournée vers l'avant comporte une première surface annulaire plane A coopérant avec le siège de clapet 28a formé sur le plongeur 28, et une seconde surface annulaire plane B coopérant avec le siège de clapet 20a formé sur le piston 20, la surface annulaire B étant formée dans un plan transversal situé en avant du plan transversal contenant la surface annulaire A et ayant un diamètre intérieur supérieur au diamètre extérieur de la surface A. Ces deux surfaces A et B sont raccordées par un troisième surface C, de forme générale tronconique.

Le clapet 36 peut être formé, comme on l'a représenté sur la moitié supérieure de la Figure 3, de deux éléments annulaires 40 et 42 portant chacun respectivement une des surfaces annulaires planes A et B, la surface tronconique C étant formée à la périphérie intérieure de l'élément 42. Une bague 44 pourra être utilisée pour solidariser les éléments 40 et 42.

Le clapet 36 peut également être formé, comme on l'a représenté sur la moitié inférieure de la Figure 3, d'un seul élément sur lequel sont formées les trois surfaces A, B et C. L'insert 46, habituellement utilisé pour rigidifier le clapet 36, pourra lui-même être réalisé dans une configuration en deux plans de façon à ce que les surfaces A et B présentent la même élasticité dans leur coopération avec les sièges de clapet 20a et 28a.

Dans les deux cas ci-dessus, la surface C pourra avantageusement être raccordée à la surface A par une surface arrondie D, ainsi qu'on le voit sur la moitié inférieure de la Figure 3. De même, dans ces deux cas, on prévoira avantageusement de réaliser la surface annulaire B de sorte que son diamètre intérieur soit sensiblement égal au diamètre du siège de clapet 20a, correspondant lui-même sensiblement au diamètre de l'alésage 26. Ainsi, on évite toute discontinuité dans le guidage de l'air entre la surface A, la surface C et la paroi de l'alésage 26.

Différents essais ont montré que le demi-angle au sommet de la surface tronconique C peut être compris entre 15 et 75 degrés, une valeur de 30 degrés pour cet angle, donnant ainsi un angle de 60 degrés entre la surface C et la paroi de l'alésage 26, pouvant toutefois être considérée comme donnant les meilleurs résultats.

D'après les explications qui précèdent, on aura compris comment l'invention permet de réduire le bruit de fonctionnement de la valve à trois voies. En effet, lors de l'actionnement de la tige de commande 30, la surface annulaire B vient d'abord au contact du siège de clapet 20a pour isoler l'une de l'autre les chambres 14 et 16. Ensuite, le siège de clapet 28a commence à s'éloigner de la surface annulaire A pour permettre à l'air à la pression atmosphérique dans l'espace annulaire 32 de pénétrer dans la chambre arrière 16, via le passage de valve 40-28a et la passage radial 34.

On voit donc que l'air en mouvement est guidé dès sa sortie du passage de valve 28a-40, par la surface C, pour éviter qu'il ne rencontre brutalement la paroi de l'alésage 26 et ne soit l'objet de turbulences générant, en combinaison avec l'interstice du passage de valve, des bruits de sifflement qui seraient transmis dans l'habitacle du véhicule. Le demandeur a ainsi pu mesurer dans le spectre du bruit de fonctionnement du servomoteur, que cette seule disposition apporte, par rapport à une valve à trois voies classique, une diminution de plus de 10 dB dans une plage de fréquences comprise entre 500 Hz et 1500 Hz, ce qui correspond à une diminution très sensible du niveau auditif.

Une telle amélioration du bruit de fonctionnement est de plus obtenue sans aucun allongement du temps de réponse du servomoteur, et on constate même une amélioration de ce temps de réponse. En effet, selon l'invention, l'écoulement de l'air pénétrant dans la chambre arrière est amélioré par la forme particulière du clapet 36. Comme d'autre part la section d'écoulement en aval de la valve à trois voies, dans un plan transversal entre le plongeur 28 et l'alésage 26, est constante, le débit d'air se trouve également amélioré, et le temps de réponse diminué.

Ces performances peuvent encore être améliorées à l'aide de moyens supplémentaires de guidage de l'air en mouvement, en amont de la valve à trois voies. C'est ainsi qu'une bague 48 peut être disposée entre la tige de commande 30 et l'alésage borgne du plongeur 28, cette bague étant réalisée en matériau souple de façon à ne pas gêner le montage rotulant de la tige 30 dans le plongeur 28. Le profil de l'extrémité arrière de la bague 48 est biseauté pour raccorder les profils de la tige de commande 30 et du siège de clapet 28a.

De même, une bague 50 peut être disposée sur la face arrière du clapet 36 et servir par exemple d'appui pour le ressort 37, en appui d'autre part sur une coupelle 52 solidaire de la partie tubulaire arrière 22 du piston 20, de façon à former un volume sensiblement clos pour le ressort 37 et éviter que l'air en mouvement ne pénètre dans ce volume et ne génère des bruits supplémentaires.

Le demandeur a d'autre part mis en évidence une autre source de bruits de fonctionnement d'un servomoteur. En effet, dans une conception classique de servomoteur, telle qu'illustrée par le document DE-A-3 924 672 précité, l'air à la pression atmosphérique parvient à la valve à trois voies après être passé à travers les spires du ressort de rappel de la tige de commande, présentant un obstacle au passage de l'air en mouvement, ne lui offrant qu'une section de passage réduite et induisant des turbulences dans l'air en mouvement, toutes causes génératrices de bruits.

La présente invention prévoit également de supprimer cette source de bruits. Pour ce faire, l'invention prévoit une séparation entre l'air en mouvement en amont de la valve à trois voies et le ressort de rappel de la tige de commande.

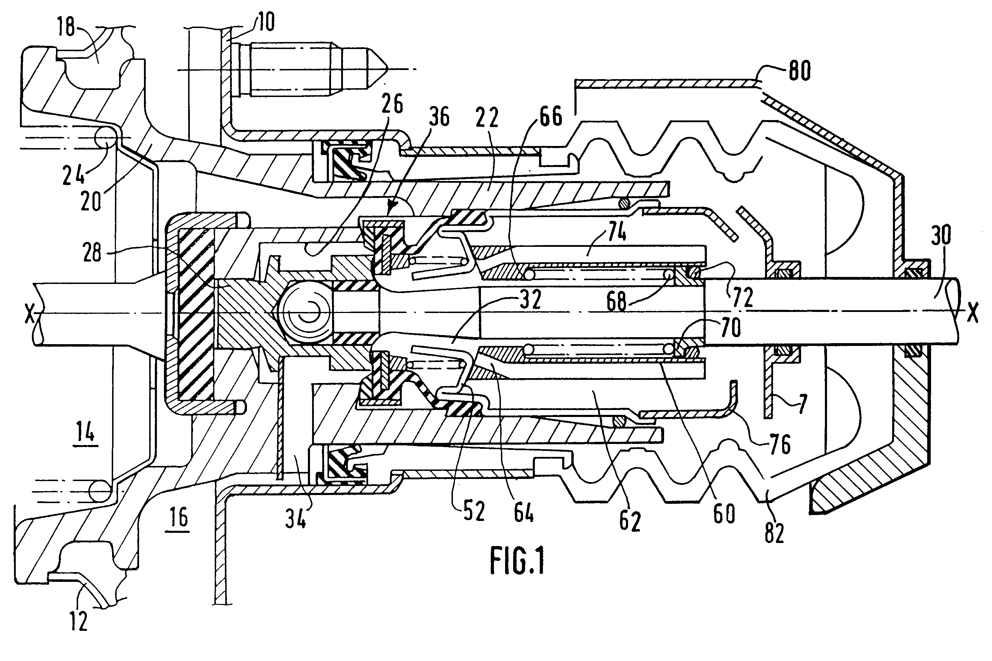

On a représenté sur la Figure 1 un premier mode de réalisation d'une telle séparation, constituée dans cet exemple par un manchon cylindrique 60 disposé dans la partie tubulaire arrière 22. Le manchon 60 est par exemple en appui par son extrémité avant sur l'extrémité arrière de la coupelle 52 servant d'appui au ressort de clapet 37 et de fixation de l'extrémité arrière du clapet 36 sur la partie tubulaire arrière 22.

L'extrémité avant du manchon 60 pourra avantageusement présenter une forme sphérique concave, et la face arrière de la coupelle 52 une forme sphérique convexe de même rayon, et de même centre situé approximativement au centre du montage rotulant de la tige de commande 30 et du plongeur 28, de façon à permettre le fonctionnement de ce montage rotulant.

Le manchon 60 a un diamètre extérieur notablement inférieur au diamètre intérieur de la partie tubulaire 22 pour définir entre ces éléments un volume annulaire 62. Des ouvertures 64 sont pratiquées dans l'extrémité avant du manchon 60, pour faire communiquer l'espace 32 et le volume 62.

Le manchon 60 est de plus formé sur sa surface intérieure avec un épaulement radial intérieur 66, formé en arrière des ouvertures 64, pour servir d'appui à un ressort de compression 68 également en appui sur un épaulement 70 de la tige de commande 30, et faisant fonction de ressort de rappel de la tige de commande. Un joint torique 72 assure l'étanchéité entre la tige de commande 30 et le manchon 60. Le manchon 60 forme ainsi une séparation de l'espace annulaire 32 en un volume annulaire 62, communiquant avec la valve à trois voies 36 par les ouvertures 64, et en un logement pour le ressort de rappel 68 de la tige de commande 30, constitué par les épaulements 66 et 70.

On comprend donc que, lors de l'actionnement de la tige de commande 30, l'air à la pression atmosphérique peut parvenir à la chambre arrière 16 du servomoteur en passant par le volume annulaire 62, les ouvertures 64 et l'espace annulaire 32. L'air en mouvement contourne ainsi par l'extérieur le ressort de rappel 68, ce qui supprime la source de bruit qu'il constituait, l'air situé autour du ressort 68 étant statique grâce au joint 72.

De façon avantageuse grâce à l'invention, le manchon 60 permet d'éliminer la source de bruit de fonctionnement du servomoteur constituée par le ressort de rappel de la tige de commande, et il permet d'atténuer encore plus l'autre source de bruit, constituée par la valve à trois voies, déjà atténuée par le clapet 36 qu'on a décrit plus haut.

En effet, le manchon 60 rend possible l'installation d'un dispositif de silencieux dans le volume annulaire 62. On peut en particulier munir le manchon 60, sur sa surface extérieure, d'ailettes 74 destinées à allonger le parcours de l'air avant les ouvertures 64. Les ailettes 74 pourront être formées d'une seule pièce, par exemple par moulage, avec le manchon 60, pour former des chicanes sur le passage de l'air dans le volume 62, ou pour former un ou plusieurs conduits de forme hélicoïdale.

Les ailettes 74 pourront occuper tout le volume 62, ou n'en occuper qu'une partie, le reste du volume 62 étant rempli de matériau absorbant phonique. Bien entendu, la ou les ailettes 74 seront disposées de telle façon qu'elles allongent le parcours de l'air sans en entraver le mouvement, pour ne pas réduire le temps de réponse du servomoteur.

De façon à encore limiter la propagation des bruits de fonctionnement du servomoteur, on pourra disposer des obstacles ou chicanes telles que 76, 78 et 80 sur le parcours de l'air avant qu'il n'atteigne le volume 62, et utiliser un soufflet 82 en matériau poreux et déformable tel qu'un élastomère poreux, offrant une surface importante soumise à l'atmosphère extérieure, et donc ne présentant pratiquement aucun obstacle à l'air qui le traverse, et remplissant simultanément la fonction de filtre anti-poussières.

On comprend donc que le bruit de fonctionnement généré par la valve à trois voies, déjà atténué dans une large mesure par la configuration du clapet 36 selon l'invention, se trouve encore atténué par la longueur du parcours imposé dans le volume 62 par la ou les ailettes 74, le matériau absorbant phonique et les éventuelles chicanes 78 à 80, et n'est plus transmis dans l'habitacle du véhicule.

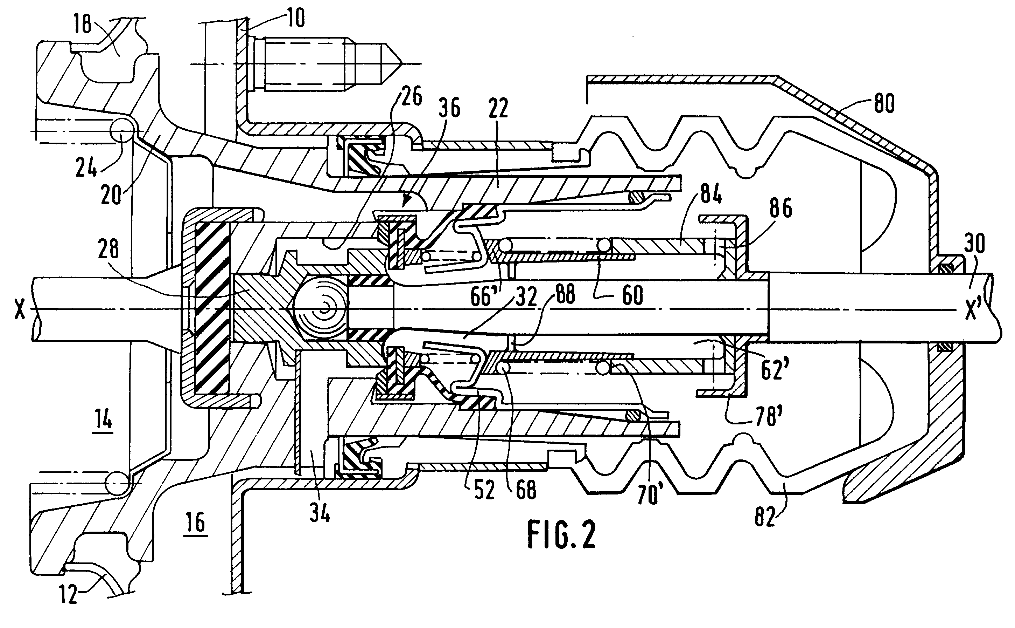

On a représenté sur la Figure 2 une variante du mode de réalisation de la Figure 1, où les mêmes éléments portent les mêmes numéros de référence.

Selon cette variante, le manchon 60 est formé sur sa surface extérieure avec un épaulement radial extérieur 66', servant d'appui pour le ressort 68. La tige de commande 30 est par ailleurs solidaire d'un manchon 84, pouvant coulisser autour du manchon 60. L'extrémité avant du manchon 84 forme une butée 70' servant d'appui pour le ressort 68. Le manchon 60 est comme précédemment formé avec une extrémité avant sphérique concave, pour coopérer avec la face arrière de la coupelle 52.

Le manchon 60 forme ainsi comme sur la Figure 1, en coopération avec la coupelle 52 et le manchon 84, une séparation de l'espace annulaire 32 en un volume annulaire 62', communiquant avec la valve à trois voies 36, et en un logement pour le ressort de rappel 68 de la tige de commande 30, constitué par les épaulements 66' et 70'. Le volume annulaire 62' peut communiquer avec l'atmosphère extérieure grâce à des ouvertures 86 ménagées dans l'extrémité arrière du manchon 84.

On comprend de même que, lors de l'actionnement de la tige de commande 30, l'air à la pression atmosphérique peut parvenir à la chambre arrière 16 du servomoteur en passant par les ouvertures 86, le volume annulaire 62' et l'espace annulaire 32. L'air en mouvement contourne ainsi le ressort de rappel 68, par l'intérieur cette fois, ce qui élimine encore la source de bruit qu'il constituait.

Comme on l'a vu plus haut, on pourra former sur la surface intérieure du manchon 60, dans le volume 62', une ou plusieurs ailettes pour former des chicanes ou des conduits de forme hélicoïdale. Ces ailettes participeront au centrage du manchon 60 autour de la tige de commande 30, de la même façon que des entretoises telles qu'on l'a représenté en 88 sur la Figure 2. On pourra également parfaire le dispositif décrit en utilisant des chicanes 78' et 80, ainsi qu'un soufflet poreux souple 82.

Les différentes dispositions décrites ci-dessus, mises en oeuvre simultanément, et principalement le clapet 36 comportant les trois surfaces A, B et C en association avec le manchon 60 des Figures 1 ou 2, ont ainsi permis de réaliser un servomoteur beaucoup moins bruyant qu'un servomoteur de conception classique, avec un temps de réponse nettement amélioré.

Bien entendu, l'invention n'est pas limitée aux modes de réalisation qui ont été décrits, mais elle est susceptible au contraire de recevoir de nombreuses modifications qui apparaîtront à l'homme du métier.

## Revendications

1. Servomoteur pneumatique d'assistance au freinage, comportant une enveloppe (10) possédant un axe de symétrie (X-X'), séparée de façon étanche par une structure de paroi mobile (12,20) en une chambre avant (14) reliée en permanence à une source de dépression, et une chambre arrière (16) reliée sélectivement à la chambre avant (14) ou à l'atmosphère extérieure par une valve à trois voies (36) actionnée par un plongeur (28) coulissant dans un alésage (26) de la paroi mobile (12,20) et solidaire d'une tige de commande axiale (30) soumise à l'action d'un ressort de rappel (68) disposé dans un espace annulaire (32) entre la tige de commande (30) et une partie tubulaire arrière (22) de la structure de paroi mobile (12,20) faisant saillie à l'extérieur de l'enveloppe (10), la valve à trois voies (36) étant disposée dans cette partie tubulaire arrière (22) et comportant un élément de clapet (36) coopérant par une première surface annulaire (A) avec un premier siège de clapet (28a) formé sur le plongeur (28) et par une seconde surface annulaire (B) avec un second siège de clapet (20a) formé sur la paroi mobile (20), les première (A) et seconde (B) surfaces annulaires étant dans des plans transversaux différents, caractérisé en ce que les première (A) et seconde (B) surfaces annulaires sont raccordées par une surface (C) de forme générale tronconique de guidage de l'air en mouvement en aval du premier siège de clapet (28a) lorsqu'il est éloigné de la première surface annulaire (A).

2. Servomoteur selon la revendication 1, caractérisé en ce que la seconde surface annulaire (B) est située dans un plan transversal en avant du plan transversal dans lequel est située la première surface annulaire (A), et possède un diamètre intérieur supérieur au diamètre extérieur de la première surface annulaire (A).

3. Servomoteur selon la revendication 2, caractérisé en ce que le demi-angle au sommet de la surface tronconique (C) est compris entre 15 et 75 degrés.

4. Servomoteur selon la revendication 3, caractérisé en ce que le diamètre intérieur de la seconde surface annulaire (B) est sensiblement égal au diamètre du second siège de clapet (20a) et au diamètre de l'alésage (26) de la paroi mobile (12,20).

5. Servomoteur selon l'une des revendications précédentes, caractérisé en ce que la seconde surface annulaire (B) et la surface tronconique (C) sont formées sur un élément annulaire (42) solidaire d'un élément annulaire (40) sur lequel est formée la première surface annulaire (A).

6. Servomoteur selon l'une des revendications 1 à 4, caractérisé en ce que les première (A) et seconde (B) surfaces annulaires et la surface tronconique (C) sont formées sur le même élément (36).

7. Servomoteur selon l'une des revendications précédentes, caractérisé en ce que la première surface annulaire (A) et la surface tronconique (C) sont raccordées par une surface arrondie (D).

8. Servomoteur selon l'une des revendications précédentes, caractérisé en ce qu'il comporte en outre des moyens de guidage de l'air en mouvement en amont du premier siège de clapet (28a).

9. Servomoteur selon la revendication 8, caractérisé en ce que les moyens de guidage de l'air en mouvement en amont du premier siège de clapet (28a) comportent une bague (48) en matériau souple disposée entre la tige de commande (30) et le plongeur (28), le profil de la bague (48) raccordant les profils de la tige de commande (30) et du premier siège de clapet (28a).

10. Servomoteur selon la revendication 8, caractérisé en ce que les moyens de guidage de l'air en mouvement en amont du premier siège de clapet (28a) comportent une bague (50) est disposée sur la face arrière de l'élément de clapet (36) pour former avec une coupelle (52) un volume sensiblement clos pour un ressort (37) sollicitant l'élément de clapet (36) vers l'avant.

11. Servomoteur selon la revendication 8, caractérisé en ce que les moyens de guidage de l'air en mouvement en amont du premier siège de clapet (28a) comportent un manchon (60) séparant l'espace annulaire (32) entre la tige de commande (30) et la partie tubulaire arrière (22) en un volume annulaire (62,62') communiquant avec la valve à trois voies (36) et en un logement (66,70;66',70') pour le ressort de rappel (68).

12. Servomoteur selon la revendication 11, caractérisé en ce que au moins une ailette (74) est formée sur la surface du manchon (60) délimitant le volume annulaire (62,62').

13. Servomoteur selon la revendication 11, caractérisé en ce que le volume annulaire (62,62') contient un matériau absorbant phonique.

## Claims

1. Pneumatic servo for assisting with braking including a casing (10) having an axis of symmetry (X-X'), divided in leaktight fashion by a movable wall structure (12, 20) into a front chamber (14) permanently connected to a source of partial vacuum, and a rear chamber (16) connected selectively to the front chamber (14) or to the outside atmosphere by a three-way valve (36) actuated by a plunger (28) sliding in a bore (26) of the movable wall (12, 20) and secured to an axial control rod (30) subjected to the action of a return spring (68) located in an annular space (32) between the control rod (30) and a rear tubular part (22) of the movable wall structure (12, 20), projecting out of the casing (10), the three-way valve (36) being located in this rear tubular part (22) and including a shutter element (36) interacting via a first annular surface (A) with a first valve seat (28a) formed on the plunger (28) and via a second annular surface (B) with a second valve seat (20a) formed on the movable wall (20), the first (A) and second (B) annular surfaces being in different transverse planes, caracterized in that the first (A) and second (B) annular surfaces are joined together by a surface (C) of frustoconical overall shape for guiding the moving air downstream of the first valve seat (28a) when it is moved away from the first annular surface (A)

2. Servo according to Claim 1, characterized in that the second annular surface (B) is located in a transverse plane forward of the transverse plane in which the first annular surface (A) is situated, and has an inside diameter greater than the outside diameter of the first annular surface (A).

3. Servo according to Claim 2, characterized in that the half-angle at the vertex of the frustoconical surface (C) lies between 15 and 75 degrees.

4. Servo according to Claim 3, characterized in that the inside diameter of the second annular surface (B) is substantially equal to the diameter of the second valve seat (20a) and to the diameter of the bore (26) of the movable wall (12, 20).

5. Servo according to one of the preceding claims, characterized in that the second annular surface (B) and the frustoconical surface (C) are formed on an annular element (42) secured to an annular element (40) on which the first annular surface (A) is formed.

6. Servo according to one of Claims 1 to 4, characterized in that the first (A) and second (B) annular surfaces and the frustoconical surface (C) are formed on the same element (36).

7. Servo according to one of the preceding claims, characterized in that the first annular surface (A) and the frustoconical surface (C) are joined together by a rounded surface (D).

8. Servo according to one of the preceding claims, characterized in that it further includes means for guiding the moving air upstream of the first valve seat (28a).

9. Servo according to Claim 8, characterized in that the means for guiding the moving air upstream of the first valve seat (28a) include a ring (48) made of flexible material located between the control rod (30) and the plunge (28), the profile of the ring (48) joining the profiles of the control rod (30) and of the first valve seat (28a) together.

10. Servo according to Claim 8, characterized in that the means for guiding the moving air upstream of the first valve seat (28a) include a ring (50) [lacuna] is located on the rear face of the shutter element (36) in order to form, together with the dished part (52), a substantially closed volume for a spring (37) urging the shutter element (36) forward.

11. Servo according to Claim 8, characterized in that the means for guiding the moving air upstream of the first valve seat (28a) include a sleeve (60) dividing the annular space (32) between the control rod (30) and the rear tubular part (22) into an annular volume (62, 62') communicating with the three-way valve (36) and into a housing (66, 70; 66', 70') for the return spring (68).

12. Servo according to Claim 11, characterized in that at least one fin (74) is formed on the surface of the sleeve (60) delimiting the annular volume (62, 62').

13. Servo according to Claim 11, characterized in that the annular volume (62, 62') contains a sound-absorbing material.

## Patentansprüche

1. Pneumatischer Bremsunterstützungs-Servomotor, mit einem Gehäuse (10), das eine Symmetrieachse (X-X') aufweist und in dichter Weise durch einen beweglichen Wandaufbau (12, 20) in eine permanent mit einer Unterdruckquelle verbundene vordere Kammer (14) und eine hintere Kammer (16) unterteilt ist, die selektiv mit der vorderen Kammer (14) oder der Außenatmosphäre über ein Dreiwegeventil (36) verbunden ist, das von einem Tauchkolben (28) betätigt wird, der in einer Bohrung (26) der beweglichen Wand (12, 20) gleitet und fest mit einer axialen Steuerstange (30) verbunden ist, die der Wirkung einer Rückstellfeder (68) ausgesetzt ist, die in einem ringförmigen Raum (32) zwischen der Steuerstange (30) und einem aus dem Gehäuse (10) nach außen hervorstehenden, hinteren rohrförmigen Abschnitt (22) des beweglichen Wandaufbaus (12, 20) angeordnet ist, wobei das Dreiwegeventil (36) in diesem hinteren rohrförmigen Abschnitt (22) angeordnet ist und ein Ventilelement (36) aufweist, das über eine erste ringförmige Fläche (A) mit einem ersten Ventilsitz (28a) zusammenwirkt, der an dem Tauchkolben (28) gebildet ist, und über eine zweite ringförmige Fläche (B) mit einem zweiten Ventilsitz (20a), der an der beweglichen Wand (20) gebildet ist, wobei die erste ringförmige Fläche (A) und die zweite ringförmige Fläche (B) in unterschiedlichen Querebenen liegen, dadurch gekennzeichnet, daß die erste ringförmige Fläche (A) und die zweite ringförmige Fläche (B) über eine allgemein kegelstumpfförmige Fläche (C) zum Führen von sich in Bewegung befindender Luft hinter dem ersten Ventilsitz (28a) verbunden sind, wenn er von der ersten ringförmigen Fläche (A) entfernt ist.

2. Servomotor nach Anspruch 1, dadurch gekennzeichnet, daß die zweite ringförmige Fläche (B) in einer Querebene angeordnet ist, die vor der Querebene liegt, in welcher die erste ringförmige Fläche (A) angeordnet ist, und einen Innendurchmesser aufweist, der größer als der Außendurchmesser der ersten ringförmigen Fläche (A) ist.

3. Servomotor nach Anspruch 2, dadurch gekennzeichnet, daß der halbe Winkel an der Spitze der kegelstumpfförmigen Fläche (C) zwischen 15 und 75° beträgt.

4. Servomotor nach Anspruch 3, dadurch gekennzeichnet, daß der Innendurchmesser der zweiten ringförmigen Fläche (B) im wesentlichen gleich dem Durchmesser des zweiten Ventilsitzes (20a) und dem Durchmesser der Bohrung (26) in der beweglichen Wand (12, 20) ist.

5. Servomotor nach einem der vorhergehenden Ansprüche, dadurch gekennzeichnet, daß die zweite ringförmige Fläche (B) und die kegelstumpfförmige Fläche (C) an einem ringförmigen Element (42) gebildet sind, das fest mit einem ringförmigen Element (40) verbunden ist, an welchem die erste ringförmige Fläche (A) gebildet ist.

6. Servomotor nach einem der Ansprüche 1 bis 4, dadurch gekennzeichnet, daß die erste ringförmige Fläche (A), die zweite ringförmige Fläche (B) und die kegelstumpfförmige Fläche (C) an demselben Element (36) gebildet sind.

7. Servomotor nach einem der vorhergehenden Ansprüche, dadurch gekennzeichnet, daß die erste ringförmige Fläche (A) und die kegelstumpfförmige Fläche (C) miteinander durch eine abgerundete Fläche (D) verbunden sind.

8. Servomotor nach einem der vorhergehenden Ansprüche, dadurch gekennzeichnet, daß er außerdem Mittel zur Führung von sich in Bewegung befindender Luft vor dem ersten Ventilsitz (28a) aufweist.

9. Servomotor nach Anspruch 8, dadurch gekennzeichnet, daß die Mittel zum Führen von sich in Bewegung befindender Luft vor dem ersten Ventilsitz (28a) einen Ring (48) aus nachgiebigem Material enthalten, die zwischen der Steuerstange (30) und dem Tauchkolben (28) angeordnet ist, wobei das Profil des Ringes (48) das Profil der Steuerstange (30) und das Profil des ersten Ventilsitzes (28a) miteinander verbindet.

10. Servomotor nach Anspruch 8, dadurch gekennzeichnet, daß die Mittel zum Führen von sich in Bewegung befindender Luft vor dem ersten Ventilsitz (28a) eine Hülse (50) enthalten, die an der hinteren Fläche des Ventilelementes (36) angeordnet ist, um mit einem Teller (52) ein im wesentlichen abgeschlossenes Volumen für eine Feder (37) zu bilden, welche das Ventilelement (36) nach vorne beaufschlagt.

11. Servomotor nach Anspruch 8, dadurch gekennzeichnet, daß die Mittel zum Führen von sich in Bewegung befindender Luft vor dem ersten Ventilsitz (28a) eine Muffe (60) enthalten, welche den ringförmigen Raum (32) zwischen der Steuerstange (30) und dem hinteren rohrförmigen Abschnitt (22) in ein ringförmiges Volumen (62, 62'), das mit dem Dreiwegeventil (36) in Verbindung steht, und in eine Aufnahme (66, 70; 66', 70') für die Rückstellfeder (68) unterteilt.

12. Servomotor nach Anspruch 11, dadurch gekennzeichnet, daß an der das ringförmige Volumen (60, 62') abgrenzenden Fläche der Muffe (60) wenigstens ein Flügel (74) gebildet ist.

13. Servomotor nach Anspruch 11, dadurch gekennzeichnet, daß das ringförmige Volumen (62, 62') ein schallabsorbierendes Material enthält.
